# EUROPÄISCHE PATENTSCHRIFT

(11) **EP 2 027 908 B1**
(45) Veröffentlichungstag und Bekanntmachung des Hinweises auf die Patenterteilung: **23.11.2011**
(21) Anmeldenummer: 08161038.8
(22) Anmeldetag: 24.07.2008
(51) Int. Cl.: B01D 46/52, B01D 46/00

(54) **Kompaktfilter**
Compact filter
Filtre compact

(30) Priorität: 27.07.2007 DE 202007010601 U
(43) Veröffentlichungstag der Anmeldung: 25.02.2009
(73) Patentinhaber: MANN+HUMMEL GmbH, 71638 Ludwigsburg (DE)
(72) Erfinder: Freisinger, Jürgen, 71563 Affalterbach (DE); Rieger, Mario, 71691 Freiberg (DE)

(56) Entgegenhaltungen:
- WO-A-97/40908
- WO-A-99/33544
- FR-A- 1 123 462
- FR-A- 1 563 990
- US-A- 5 106 397

## Beschreibung

### Technisches Gebiet

Die Erfindung betrifft einen Kompaktfilter, insbesondere einen Kompaktluftfilter für Kraftfahrzeuge, mit den Merkmalen nach dem Oberbegriff des Anspruchs 1.

### Stand der Technik

Bei der Filtrierung von Luft finden verbreitet sogenannte Kompaktfilter Einsatz, die insbesondere aus geschichtetem Filterpapier gebildet sind. Eine gewellte Filterpapierbahn ist auf eine glatte Filterpapierbahn aufgebracht. Dieses so gebildete Halbzeug wird zu einem Filterkörper gewickelt oder gestapelt, in dessen Folge eine Vielzahl von parallel zueinander verlaufenden Gaskanälen entsteht. Diese Gaskanäle sind wechselseitig durch Stopfen verschlossen. Einströmende Luft gelangt von der Rohseite aus in die eingangsseitig offenen Gaskanäle und wird durch die ausgangsseitigen Stopfen gezwungen, durch die Filterwände in die benachbarten Gaskanäle hindurchzutreten. Von dort gelangt die filtrierte Luft durch die ausgangsseitig offenen Gaskanäle zur Reinseite des Filters. Die WO 97/40908 A betrifft ein gewickeltes Filterelement, welches um einen Kern herum angeordnet ist, wobei der Kern mit einer Kappe versehen ist, damit die zu reinigende Luft nicht durch das Filterelement innerhalb des Kerns strömen kann. Ein aufgeweitetes Rohr im Filtergehäuse sorgt dafür, dass die äußeren Bereiche des Filterelementes mit Luft versorgt werden.
Die US 5 106 397 A beschreibt eine Abdeckkappe, die verhindert, dass zu reinigende Luft durch die mittlere Öffnung eines gewickelten Luftfilters strömt.
Aus der WO 99/33544 A und der FR 1 563 990 A sind innerhalb eines Filterelementes konzentrisch angeordnete Umlenkrohre bekannt, die ein gleichmäßiges Durchströmen der zu reinigenden Luft durch ein Filterelement sicherstellen sollen.
Die FR 1 123 462 zeigt ein Filterelement mit einem integrierten Leitelement. Die gesamte auf die Stirnfläche des Filterelementes einströmende Fluidströmung wird um einen zentral in der Strömung liegenden Kegel geleitet und auf die Filterfläche verteilt, wobei die Stirnseite des Filterelementes rechtwinklig zur Anströmung angeordnet ist.

Mit der vorgenannten Bauweise lassen sich Luftfilter in sehr kompakter Bauform erstellen. Abhängig von den zur Verfügung stehenden Platzverhältnissen kann der Wickel- oder Stapelkörper und damit der Filter insgesamt flach mit einer Schmalseite und einer Längsseite ausgebildet werden. Beengte Bauverhältnisse können eine unsymmetrische Anströmung erforderlich machen, bei der die Einströmöffnung insbesondere im Bereich der Schmalseite mit Winkel- und Lageversatz zur Längsachse des Filterkörpers liegt. Die einströmende Luft trägt Staubpartikel oder dergleichen mit, die aufgrund ihrer Massenträgheit nicht Im gewünschten Maße in eine Richtung parallel zu den Gaskanälen umgelenkt werden. Infolge ihrer Massenträgheit werden die Staubpartikel mit erhöhter Konzentration zu demjenigen Wandbereich des Filtergehäuses getragen, der der Einströmöffnung gegenüber liegt. In der Folge bildet sich eine Staubbeladung des Kompaktfilterelementes aus, die nahe der Einströmöffnung gering ist und zur entfernten Seite hin ansteigt. Diese ungleichmäßige Staubbeladung führt dazu, dass sich einzelne Bereiche des Filterkörpers frühzeitig zusetzen und die Filtrierleistung abnimmt. Die potentielle Lebensdauer des Kompaktfilters ist nicht vollständig ausgeschöpft.

Der Erfindung liegt die Aufgabe zugrunde, einen gattungsgemäßen Kompaktfilter derart weiterzubilden, dass die Gleichmäßigkeit der Schmutzbeladung über der Grundfläche seines Filterelementes verbessert ist.

Diese Aufgabe wird durch einen Kompaktfilter mit den Merkmalen des Anspruchs 1 gelöst.

### Offenbarung der Erfindung

Es wird ein Kompaktfilter, insbesondere ein Kompaktluftfilter für Kraftfahrzeuge mit einem Kompaktfilterelement zum austauschbaren Einsatz in einem Filtergehäuse vorgeschlagen, wobei das Kompaktfilterelement einen Filterkörper mit einer Längsachse umfasst. Das Kompaktfilterelement weist auf seiner Rohseite ein gemeinsam mit ihm aus dem Filtergehäuse entnehmbares Strömungsleitelement mit mindestens einer gegenüber der Längsachse geneigten Leitfläche auf. Das Strömungsleitelement kann auf dem Filterkörper lose oder klemmend aufgesteckt sein und ist bevorzugt fest mit diesem beispielsweise durch direktes Anspritzen an ein mit dem Element verbundenen Kunststoffteil befestigt. Es kann auch durch Verklebung, Einschäumen oder dergleichen verbunden sein. Durch geeignete Ausgestaltung des Strömungsleitelementes erfährt die ankommende, staubbeladene Luftströmung eine Umlenkung zumindest näherungsweise in eine Richtung, die parallel zur Längsachse des Filterkörpers bzw. dessen Luftkanälen liegt. Die vom Luftstrom mitgetragenen Staubpartikel werden gezwungen, dieser Umlenkung zu folgen. Hierdurch wird eine Vergleichmäßigung der Staubbeladung des Filterkörpers erzielt. Die nutzbare Lebensdauer ist erhöht. Die Befestigung des Strömungsleitelementes am Filterkörper übt eine stabilisierende Wirkung auf diesen aus. In den vorgesehenen Wartungsintervallen ist er leichter zu handhaben. Der Ein- und Ausbau ist vereinfacht. Darüber hinaus ist eine exakte Lageausrichtung des Strömungsleitelementes gegenüber dem Filterkörper sichergestellt, so dass präzise definierte Einströmverhältnisse mit gleichmäßiger Staubbeladung auch nach Auswechseln des Kompaktfilterelementes dauerhaft erhalten bleiben. Der Benutzer ist gezwungen, das Strömungsleitelement gemeinsam mit dem Filterkörper auszuwechseln, so dass Schäden, Abnutzungen oder übermäßige Verschmutzung nicht unbemerkt bleiben.

Erfindungsgemäß grenzt ein abströmseitiges Ende des Strömungsleitelementes an eine einströmseitige Stirnfläche des Filterkörpers etwa im Bereich dessen Längsachse an, wobei ein anströmseitiges Ende des Strömungsleitelementes etwa auf einer zu definierenden Position der Eintrittsfläche des Filtergehäuses liegt. Hierdurch wird der einströmende Luftstrom in zwei Teilströme aufgeteilt. Auch die mitgeführte Staubmenge wird in gleichem Maße in zwei Teilmengen separiert und über zwei Teilflächen des Filterkörpers näherungsweise gleichmäßig verteilt. Sinngemäß das Gleiche kann auch für eine höhere Anzahl von Strömungsleitelementen gelten, die den eintretenden Luftstrom und die mitgeführte Staubmenge in eine entsprechende Anzahl von näherungsweise gleich großen Teilströmen aufteilt und auf zumindest näherungsweise gleich große Teilflächen des Filterkörpers verteilt. Die Gleichmäßigkeit der Staubbelastung des Filterkörpers ist auch bei Anströmverhältnissen mit ausgeprägter Unsymmetrie deutlich verbessert. Die Aufteilung in Teilströme kann auch ungleichmäßig erfolgen.

In der erfindungsgemäßen Ausgestaltung ist das Strömungsleitelement als gekrümmte Platte ausgebildet. Bei hoher Wirksamkeit der Strömungsumlenkung ergibt sich ein geringer Strömungswiderstand mit geringem Einfluss auf den Gesamtströmungswiderstand des Kompaktluftfilters. Die Ausbildung als gekrümmte Platte führt zu einer geringen Empfindlichkeit gegen Abrasion durch auftreffende Staubpartikel.

In einer nicht beanspruchten Alternative weist das Strömungsleitelement zwei mit Abstand zueinander liegende Leitflächen auf, wobei sich ihr Abstand in Strömungsrichtung von einem Eingangsabstand zu einem Minimalabstand verengt. Über die vorstehend beschriebene Umlenkfunktion hinausgehend weist diese Anordnung auch eine Akustikfunktion auf: Der sich in Strömungsrichtung verengende Abstand wirkt als Schalldämpfer für Ansauggeräusche. In zweckmäßiger Weiterbildung erweitert sich der Abstand der Leitflächen in Strömungsrichtung vom Minimalabstand aus zu einem Ausgangsabstand. Hierdurch ist ein Diffusor gebildet, der unter Beibehaltung der Schalldämpfungsfunktion den Druckverlust im Bereich des Minimalabstandes zumindest näherungsweise kompensiert. Der Durchströmungswiderstand ist minimiert.

Die erfindungsgemäße Anordnung kann wirkungsvoll bei einer Vielzahl von Anströmverhältnissen des Kompaktfilters eingesetzt werden. Bevorzugt ist ein Einsatz bei Anordnungen vorgesehen, bei dem die Einströmöffnung des Filtergehäuses mit ihrer Mittelachse gegenüber der Längsachse des Filterkörpers einen seitlichen Lageversatz und/oder einen Winkelversatz aufweist. Insbesondere weist die Grundfläche des Filterkörpers eine Schmalseite und eine Längsseite auf, wobei die Einströmöffnung im Bereich der Schmalseite angeordnet ist. Hierbei ergibt sich eine ausgeprägte Wirksamkeit des Strömungsleitelementes, bei dem eine besonders ausgeprägte Tendenz zur ungleichmäßigen Staubbeladung mit hoher Wirksamkeit ausgeglichen wird.

### Kurze Beschreibung der Zeichnungen

Ausführungsbeispiele der Erfindung sind nachfolgend anhand der Zeichnung näher beschrieben. Es zeigen:

Figur 1 in schematischer Perspektivansicht einen Kompaktfilter mit Einzelheiten der Strömungsverhältnisse ohne Strömungsleitelement;

Figur 2 in schematischer Seitenansicht ein Ausführungsbeispiel der Erfindung mit einem Strömungsleitelement in Form einer gekrümmten Platte;

Figur 3 eine nicht beanspruchte Variante der Anordnung nach Figur 2 mit zwei einen Diffusor bildenden Leitflächen.

### Ausführungsform der Erfindung

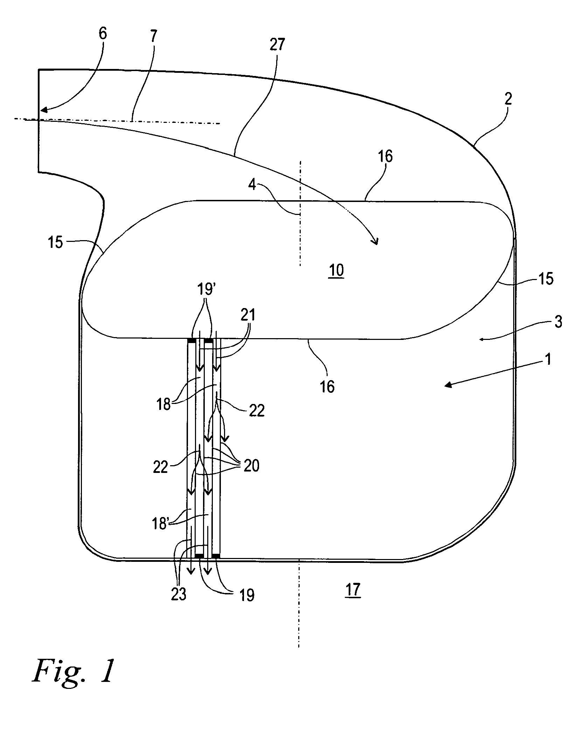

Fig. 1 zeigt in schematischer Perspektivansicht einen Kompaktfilter, der als Kompaktluftfilter für ein Kraftfahrzeug ausgebildet ist. Es können jedoch auch andere Einsatzzwecke insbesondere im Bereich der Gas- und Luftfiltration vorgesehen sein. Der Kompaktfilter umfasst ein Kompaktfilterelement 1 mit einem Filterkörper 3 und ein schematisch angedeutetes Filtergehäuse 2. Das Filtergehäuse 2 ist in nicht näher dargestellter Weise teilbar, um in bestimmten Wartungsintervallen das Kompaktfilterelement 1 austauschen zu können. Der Filterkörper 3 ist aus Filterpapier gebildet, wobei abwechselnd eine glatte und eine gewellte Filterpapierbahn aufeinander gelegt sind. Aus einem derart gebildeten Halbzeug wird der Filterkörper 3 durch Wickeln, Stapeln oder Falten gebildet. Die wechselseitig aneinander angrenzenden gewellten und glatten Filterpapierbahnen erzeugen aufgrund ihrer Schichtfolge eine Vielzahl von Gaskanälen 18, 18', die parallel zu einer Längsachse 4 des Filterkörpers 3 verlaufen. Der Filterkörper 3 ist nahezu vollständig von Gaskanälen 18, 18' durchsetzt. Der besseren Übersichtlichkeit halber sind jedoch nur einige wenige Gaskanäle 18, 18' in schematischer Längsschnittdarstellung als Prinzipskizze gezeigt.

Benachbarte Gaskanäle 18, 18' sind wechselseitig durch Stopfen 19, 19' verschlossen. Jeder eingangsseitige Gaskanal 18, der an seinem einer Reinseite 17 des Kompaktfilters angrenzenden Ende mit einem Stopfen 19 verschlossen ist, liegt benachbart zu je einem ausgangsseitigen Gaskanal 18', der an seinem einer Rohseite 10 des Kompaktfilters zugewandten Ende mit einem Stopfen 19' verschlossen ist.

Das Filtergehäuse 2 weist eine Einströmöffnung 6 mit einer Mittelachse 7 auf, durch die staubbehaftete Luft entsprechend einem Pfeil 27 zur Rohseite 10 des Kompaktfilterelementes 1 strömt. Dort tritt die staubbehaftete Luft in die eingangsseitig offenen Gaskanäle 18 ein, wie dies durch Pfeile 21 angedeutet ist. Dieser eingangsseitige Luftstrom wird durch die ausgangsseitigen Stopfen 19 aufgestaut. Die eingangsseitigen Gaskanäle 18 und die ausgangsseitigen Gaskanäle 18' sind durch Filterwände 20 aus Filterpapier von einander getrennt. Infolge der vorgenannten Stauwirkung tritt der eingangsseitige Luftstrom entsprechend Pfeilen 22 durch die Filterwände 20 hindurch und in die ausgangsseitigen Gaskanäle 18' ein. Hierbei wird die hindurchtretende Luft von Staubpartikeln gereinigt und tritt als gereinigte Luft entsprechend Pfeilen 23 aus den ausgangsseitigen Gaskanälen 18' zur Reinseite 17 hin aus. Die eingangsseitigen Stopfen 19' verhindern eine Rückströmung zur Rohseite 10.

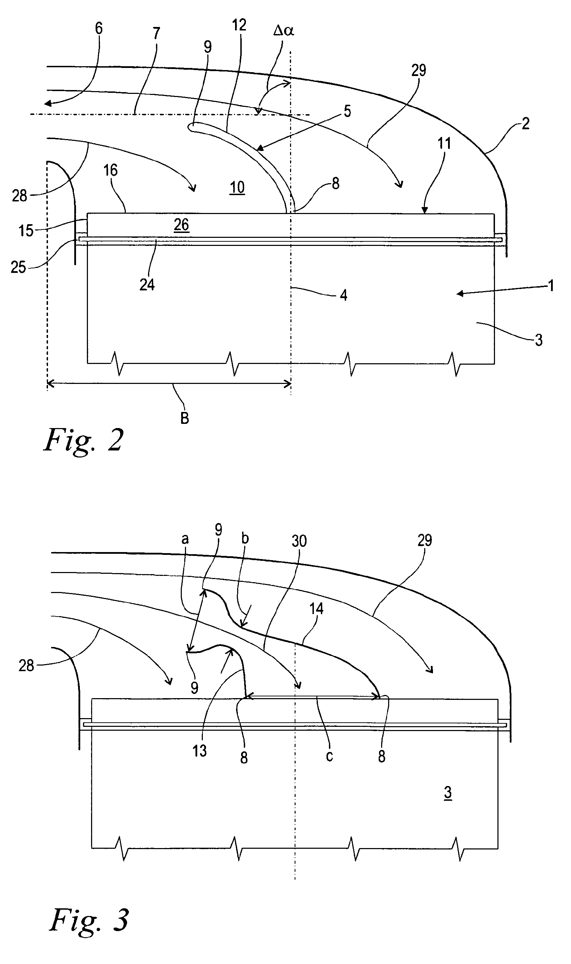

Zur Erläuterung der Strömungsverhältnisse ist der Kompaktfilter hier ohne erfindungsgemäße, jedoch im Zusammenhang mit den Fig. 2 und 3 erläuterte Strömungsleitelemente 5 dargestellt. Der Filterkörper 3 weist einen langgestreckten Grundriss mit Schmalseiten 15 und Längsseiten 16 auf. Die Längsseiten 16 sind beispielsweise mehr als doppelt so lang wie die Schmalseiten 15, wodurch ein Seitenverhältnis von ≥ 2 gebildet ist. Im Bereich einer Schmalseite 15, und zwar oberhalb des Filterkörpers 3 auf dessen Rohseite 10 ist die Einströmöffnung 6 angeordnet. Ihre Mittelachse 7 verläuft etwa parallel zu den Längsseiten 16, also etwa senkrecht zur Längsachse 4 des Kompaktfilterelements 1. Der eintretende Luftstrom ist durch einen Pfeil 27 angedeutet, der in einem Winkel von deutlich größer als 0° zur Längsachse 4 verläuft. Ohne die in den Fig. 2 und 3 dargestellten Strömungsleitelemente 5 wird der mit dem eintretenden Luftstrom 27 mitgetragene Staub infolge seiner Massenträgheit mit erhöhter Konzentration zu derjenigen Schmalseite 15 getragen, die der Einströmöffnung 6 gegenüberliegt. Hier bildet sich ohne ergänzende Maßnahmen eine erhöhte Staubbeladung aus, während im Bereich der an die Einströmöffnung 6 angrenzenden Schmalseite 15 die Staubbeladung des Filterkörpers 3 deutlich geringer ist.

Die Fig. 2 zeigt in schematischer Seitenansicht ein Ausführungsbeispiel der Erfindung, bei der der Kompaktfilter nach Fig. 1 jeweils mit einem Strömungsleitelement 5 versehen ist. Sofern nicht anders angegeben, stimmen die Bezugszeichen in dem Ausführungsbeispiel nach Fig. 2 und dem nicht beanspruchten Ausführungsbeispiel nach Figur 3 untereinander sowie mit denjenigen nach Fig. 1 überein. In Fig. 2 ist stellvertretend auch für andere Ausführungsbeispiele dargestellt, dass die Einströmöffnung 6 des Filtergehäuses 2 mit ihrer Mittelachse 7 gegenüber der Längsachse 4 des Filterkörpers 3 einen seitlichen Lageversatz B aufweist. Dieser beträgt etwa die Hälfte der Längserstreckung der Längsseite 16 kann aber auch beliebig sein. Darüber hinaus weist die Mittelachse 7 der Einströmöffnung 6 gegenüber der Längsachse 4 des Filterkörpers 3 einen Winkelversatz Δα auf, der im gezeigten Ausführungsbeispiel etwa 90° beträgt. Es kann jedoch auch ein abweichender, insbesondere geringerer Winkelversatz Δα vorgesehen sein, der in einem Bereich von einschließlich 30° bis einschließlich 90°, bevorzugt von einschließlich 45° bis einschließlich 90° und insbesondere in einem Bereich von einschließlich 60° bis einschließlich 90° liegt. Der seitliche Lageversatz B relativ zur Längsachse 4 kann null sein, beträgt vorteilhaft mindestens ein Viertel, zweckmäßig mindestens ein Drittel und insbesondere etwa die Hälfte der Längserstreckung der Längsseite 16 oder mehr.

Das Strömungsleitelement 5 weist eine gegenüber der Längsachse 4 zur Mittelachse 7 hin geneigte Leitfläche 12 auf, und ist im gezeigten Ausführungsbeispiel als gekrümmte Platte ausgebildet. Ein abströmseitiges Ende 8 des Strömungsleitelementes 5 grenzt an eine einströmseitige Stirnfläche 11 des Filterkörpers 3 auf dessen Rohseite 10 zumindest näherungsweise im Bereich dessen Längsachse 4 an. Ein anströmseitiges Ende 9 des Strömungsleitelementes 5 ist als aerodynamisch gerundete Kante ausgebildet und liegt etwa auf oder zumindest nahe der Mittelachse 7 der Einströmöffnung 6. Es kann zweckmäßig sein, das Strömungsleitelement 5 gegenüber der Darstellung nach Fig. 2 verkürzt auszubilden, wobei die anströmseitige Kante bzw. das anströmseitige Ende 9 mit größerem Abstand zur Mittelachse 7 der Einströmöffnung 6 liegt. Auch das abströmseitige Ende 8 des Strömungsleitelementes 5 kann einen gewissen Abstand zur Stirnfläche 11 des Filterkörpers 3 aufweisen. Die gekrümmte, hier zeichnerisch nicht dargestellte Mittellinie des Strömungsleitelementes 5 in der Seitenansicht nach Fig. 2 sollte sich jedoch in jedem Falle in gedachter Verlängerung etwa an die Mittelachse 7 und an die Längsachse 4 anschmiegen.

Durch die vorgenannte Ausgestaltung des Strömungsleitelementes 5 mit der Leitfläche 12 wird der eintretende Luftstrom in zwei Teilströme entsprechend Pfeilen 28, 29 aufgeteilt. Es ist zu erkennen, dass diese beiden Teilströme mengenmäßig etwa gleich groß sind. Durch das abströmseitige Ende 8 des Strömungsleitelementes 5 im Bereich der Längsachse 4 wird die Stirnfläche 11 des Filterkörpers 3 in zwei ebenfalls etwa gleich große Teilflächen aufgeteilt. Die Aufteilung kann aber auch in anderen Teilungsverhältnissen gestaltet werden. Die beiden Teilströme 28, 29 mit anteilig etwa gleicher Staubbeladung werden zumindest näherungsweise gleichmäßig auf die Stirnfläche 11 des Filterkörpers 3 verteilt, wodurch die Staubbelastung des Filterkörpers 3 bezogen auf dessen Grundfläche bzw. Stirnfläche 11 zumindest näherungsweise vergleichmäßigt ist.

Der Darstellung nach Fig. 2 ist noch zu entnehmen, dass das Kompaktfilterelement 1 einen umlaufenden, am Filterkörper 3 angebrachten Dichtungsträger 24 aufweist, an dem eine umlaufende Dichtung 25 zur Abdichtung des Filterkörpers 3 gegenüber dem Filtergehäuse 2 befestigt ist. Darüber hinaus weist das Kompaktfilterelement 1 an der Rohseite 10 einen umlaufenden, aus weichem oder hartem Kunststoff oder aufgeschäumten Ausklopfschutz 26 auf, der gemeinsam mit dem Dichtungsträger 24 und der Dichtung 25 durch Verklebung, Aufschäumung oder dergleichen fest mit dem Filterkörper 3 verbunden ist. Es kann zweckmäßig sein, das Strömungsleitelement 5 beispielsweise mit einem entsprechenden Rahmen auf den Ausklopfschutz oder auf den Dichtungsträger 24 aufzustecken. Bevorzugt ist das Strömungsleitelement fest und insbesondere unlösbar mit dem Filterkörper 3 verbunden, was beispielsweise durch Verklebung oder gemeinsames Aufschäumen mit dem Ausklopfschutz 26 und/oder dem Dichtungsträger 24 geschehen kann. Durch die Befestigung des Strömungsleitelementes 5 am Filterkörper 3 wird bei Wartungsintervallen nach Öffnen des Filtergehäuses 2 die Einheit aus Kompaktfilterelement 1 und Strömungsleitelement 5 gemeinsam entnommen und ausgetauscht.

Fig. 3 zeigt eine nicht beanspruchte Variante der Anordnung nach Fig. 2, bei der das Strömungsleitelement 5 zwei mit Abstand zueinander liegende Leitflächen 13, 14 aufweist. Im Bereich ihrer anströmseitigen Enden 9 weisen die beiden Leitflächen 13, 14 einen Eingangsabstand a auf, der so bemessen ist, dass der eintretende Luftstrom in drei zumindest näherungsweise gleich große Teilströme 28, 29, 30 aufgeteilt wird. Ausgehend vom Eingangsabstand a verengt sich der Abstand zwischen den Leitflächen 13, 14 in Strömungsrichtung zu einem Minimalabstand b, der als Geräuschdämpfer für Ansauggeräusche wirkt. Weiter in Strömungsrichtung entsprechend dem Pfeil 30 vergrößert sich der Abstand wieder, bis er an den abströmseitigen Enden 8 bzw. angrenzend an die Stirnfläche 11 des Filterkörpers 3 einen größeren Ausgangsabstand c erreicht. Hierdurch bilden die beiden Leitflächen 13, 14 stromab des Minimalabstandes b einen Diffusor zur Rückgewinnung des Druckverlustes im Bereich des Minimalabstandes b. Die Leitflächen 13, 14 sind aerodynamisch gerundet gebogen, um Strömungsablösungen zu vermeiden. Vergleichbar zu einem Venturiquerschnitt entsteht eine gleichmäßige, verwirbelungsfreie Anströmung des Filterkörpers 3.

In den Ausführungsbeispielen nach den Fig. 2 und 3 sind die Leitflächen 12, 13, 14 entsprechend ihrer Seitenansicht eindimensional gekrümmt, verlaufen also senkrecht zur Zeichnungsebene bzw. parallel zu den Schmalseiten 15 geradlinig. Es können jedoch auch Ausführungen mit räumlicher, also dreidimensionaler Krümmung zweckmäßig sein.

Die Verschnappung des Filterelements mit der Luftleitrippe schafft auch die Möglichkeit einen Diffusor ohne zusätzlichen Aufwand zu integrieren.

## Patentansprüche

1. Kompaktfilter, insbesondere ein Kompaktluftfilter für Kraftfahrzeuge, mit einem Filtergehäuse (2) und einem Kompaktfilterelement (1) zum austauschbaren Einsatz in dem Filtergehäuse (2), wobei das Kompaktfilterelement (1) einen Filterkörper (3) mit einer Längsachse (4) umfasst, wobei das Kompaktfilterelement (1) auf seiner Rohseite (10) ein gemeinsam mit ihm aus dem Filtergehäuse (2) entnehmbares Strömungsleitelement (5) mit mindestens einer gegenüber der Längsachse (4) geneigten Leitfläche (12, 13, 14) aufweist, **dadurch gekennzeichnet, dass** ein abströmseitiges Ende (8) des Strömungsleitelementes (5) an eine einströmseitige Stirnfläche (11) des Filterkörpers (3) etwa im Bereich dessen Längsachse (4) angrenzt, wobei ein anströmseitiges Ende (9) des Strömungsleitelementes (5) etwa auf einer Mittelachse (7) einer Einströmöffnung (6) des Filtergehäuses (2) liegt, wobei der eintretende Luftstrom und die mitgeführte Staubmenge in näherungsweise gleich große Teilströme aufgeteilt und auf zumindest näherungsweise gleich große Teilflächen des Filterkörpers verteilt wird, wobei das Strömungsleitelement (5) als gekrümmte Platte ausgebildet ist.

2. Kompaktfilter nach Anspruch 1, **dadurch gekennzeichnet, dass** das Strömungsleitelement (5) fest mit dem Filterkörper (3) verbunden ist.

3. Kompaktfilter nach einem der Ansprüche 1 oder 2, **dadurch gekennzeichnet, dass** das Strömungsleitelement (5) zwei mit Abstand zu einander liegende Leitflächen (13, 14) aufweist, wobei sich ihr Abstand in Strömungsrichtung von einem Eingangsabstand (a) zu einem Minimalabstand (b) verengt.

4. Kompaktfilter nach Anspruch 43, **dadurch gekennzeichnet, dass** sich der Abstand der Leitflächen (13, 14) in Strömungsrichtung vom Minimalabstand (b) aus zu einem Ausgangsabstand (c) erweitert.

5. Kompaktfilter nach einem der Ansprüche 1 bis 4, **dadurch gekennzeichnet, dass** die Einströmöffnung (6) des Filtergehäuses (2) mit ihrer Mittelachse (7) gegenüber der Längsachse (4) des Filterkörpers (3) einen seitlichen Lageversatz (B) und / oder einen Winkelversatz (Δα) aufweist.

6. Kompaktfilter nach einem der Ansprüche 1 bis 5, **dadurch gekennzeichnet, dass** die Grundfläche des Filterkörpers (3) eine Schmalseite (15) und eine Längsseite (16) aufweist, wobei die Einströmöffnung (6) im Bereich der Schmalseite (15) angeordnet ist.

7. Kompaktfilter nach einem der vorherigen Ansprüche, **dadurch gekennzeichnet, dass** der Filterkörper aus einem zickzackformig gefalteten konzentrisch aufgebauten Filtermedium besteht, das an seiner anströmseitigen Stirnfläche und / oder seiner abströmseitigen Stirnfläche eine Endscheibe aufweist.

8. Kompaktfilter nach einem der Ansprüche 1 bis 7, **dadurch gekennzeichnet, dass** der Filterkörper aus einem zickzackförmig gefalteten Filtermedium besteht, das Filtertaschen aufweist, die sich in Anström- und Abströmseite in Anström- und Abströmrichtung erstrecken.

## Claims

1. Compact filter, in particular a compact air filter for motor vehicles, with a filter housing (2) and a compact filter element (1) for a replaceable insertion into the filter housing (2), the compact filter element (1) comprising a filter body (3) with a longitudinal axis (4), the compact filter element (1) featuring at its dirty side (10) a flow guiding element (5) that can be removed, together with the compact filter element, from the filter housing (2) and that has at least one guiding surface (12, 13, 14) inclined in relation to the longitudinal axis, **characterized in that** an end (8) at the off-flow side of the flow guiding element (5) is adjacent to an end face (11) at the inflow side of the filter body (3) in about the area of its longitudinal axis (4), an end (9) at the in-flow side of the flow guiding element (5) being located approximately on a central axis (7) of an inflow opening (6) of the filter housing (2), the incoming air flow and the quantity of dust carried with the air flow being divided into partial flows having approximately the same size and being distributed to partial surfaces of the filter body having at least approximately the same size, the flow guiding element (5) being designed as curved plate.

2. Compact filter according to claim 1, **characterized in that** the flow guiding element (5) is firmly connected with the filter body (3).

3. Compact filter according to one of the claims 1 or 2, **characterized in that** the flow guiding element (5) features two guiding surfaces (13, 14) located at a distance to each other, the distance being narrowed in flow direction from an inlet distance (a) to a minimal distance (b).

4. Compact filter according to claim 3, **characterized in that** the distance of the guiding surfaces (13, 14) is increased in flow direction from the minimal distance (b) to the outlet distance (c).

5. Compact filter according to one of the claims 1 to 4, **characterized in that** the inflow opening (6) of the filter housing (2) features, with its central axis (7), a lateral position offset (B) and / or an angular offset (Δα) in relation to the longitudinal axis (4) of the filter body (3).

6. Compact filter according to one of the claims 1 to 5, **characterized in that** the base area of the filter body (3) features a narrow side (15) and a longitudinal side (16), the inflow opening (6) being disposed in the area of the narrow side (15).

7. Compact filter according to one of the above claims, **characterized in that** the filter body is made of a fanfold filter medium with a concentric design that features an end plate at its end face at the inflow side and / or at its end face at the outflow side.

8. Compact filter according to one of the claims 1 to 7, **characterized in that** the filter body is made of a fanfold filter medium that features filter bags which extend at inflw and outflow side into inflow and outflow direction.

## Revendications

1. Filtre compact, notamment un filtre à air compact pour les véhicules automobiles, avec un boîtier de filtre (2) et un élément de filtre compact (1) pouvant être inséré de manière échangeable dans le boîtier de filtre (2), l'élément de filtre compact (1) comprenant un corps de filtre (3) avec un axe longitudinal (4), l'élément de filtre compact (1) présentant sur son côté brut (10) un élément de guidage du flux (5) pouvant être retiré, avec l'élément de filtre compact, du boîtier de filtre (2) et doté d'au moins une surface de guidage (12, 13, 14) inclinée par rapport à l'axe longitudinal (4), **caractérisé en ce qu'**une extrémité côté sortie (8) de l'élément de guidage du flux (5) jouxte une extrémité côté entrée (11) du corps de filtre (3), au niveau environ de l'axe longitudinal (4) du corps de filtre, une extrémité côté entrée (9) de l'élément de guidage du flux (5) étant située environ sur un axe médian (7) d'une ouverture d'entrée (6) du boîtier de filtre (2), le flux d'air entrant et la quantité de poussière l'accompagnant étant divisés en des flux partiels de taille approximativement identique et étant répartis sur des surfaces partielles au moins de taille approximativement identique du corps de filtre, l'élément de guidage du flux (5) étant réalisé sous forme de plaque courbée.

2. Filtre compact selon la revendication 1, **caractérisé en ce que** l'élément de guidage du flux (5) est fermement fixé au corps de filtre (3).

3. Filtre compact selon l'une des revendications 1 ou 2, **caractérisé en ce que** l'élément de guidage du flux (5) présente deux surfaces de guidage (13, 14) espacées l'une de l'autre, la distance entre ces surfaces diminuant dans le sens du flux d'une distance d'entrée (a) à une distance minimale (b).

4. Filtre compact selon la revendication 3, **caractérisé en ce que** la distance entre les surfaces de guidage (13, 14) augmente dans le sens du flux d'une distance minimale (b) à une distance de sortie (c).

5. Filtre compact selon l'une des revendications 1 à 4, **caractérisé en ce que** l'ouverture d'entrée (6) du boîtier de filtre (2) présente, avec son axe médian (7), un décalage latéral (B) et/ou un décalage angulaire (Δα) par rapport à l'axe longitudinal (4) du corps de filtre (3).

6. Filtre compact selon l'une des revendications 1 à 5, **caractérisé en ce que** la surface de base du corps de filtre (3) présente un côté étroit (15) et un côté longitudinal (16), l'ouverture d'entrée (6) étant disposée dans la zone du côté étroit (15).

7. Filtre compact selon l'une des revendications précédentes, **caractérisé en ce que** le corps de filtre est constitué d'une matière filtrante concentrique et pliée en accordéon qui est pourvue d'une rondelle d'extrémité sur sa face frontale côté entrée et/ou sur sa face frontale côté sortie.

8. Filtre compact selon l'une des revendications 1 à 7, **caractérisé en ce que** le corps de filtre (3) est constitué d'une matière filtrante pliée en accordéon qui est pourvue de poches qui s'étendent du côté entrée et du côté sortie dans le sens de l'entrée et dans le sens de sortie.
